# EUROPEAN PATENT APPLICATION

(11) **EP 2 570 922 A1**
(43) Date of publication of application: **20.03.2013**
(21) Application number: 11290409.9
(22) Date of filing: 13.09.2011
(51) Int. Cl.: G06F 9/50

(54) **Method and system for managing an elastic server farm**

(71) Applicant: Alcatel Lucent, 75007 Paris (FR)
(72) Inventor: Janssens, Nico, 2580 Putte (BE); Duminuco, Alessandro, 2000 Antwerpen (BE); Forlivesi, Claudio, 1200 Sint-Lambrechts-Woluwe (BE)
(74) Representative: Beck, Michaël Andries T

(57) **Abstract**

A method for managing an elastic server farm comprising a plurality of servers, said servers being ordered according to a priority order, the method comprising monitoring a load on the server having lowest priority according to said priority order; and declaring an overload condition for said elastic server farm if said load exceeds a predetermined first threshold and declaring an underload condition for said elastic server farm if said load drops below a predetermined second threshold.

## Description

### Technical Field

The present invention pertains to the field of cloud computing.

### Background

"Cloud computing" is a term used to denote a type of service in which customers are offered computing resources that can be contracted on an as-needed basis. The use of virtualization techniques enables cloud customers to adapt the amount of provisioned resources by leasing more or less virtual machines from the cloud provider on demand. This feature is often referred to as "elasticity" and enables a cloud customer to handle unanticipated load evolution in a cost-effective manner. Elasticity also enables the cloud provider to lease out unused resources to other customers.

In addition to manual elasticity, certain cloud providers also offer application programming interfaces (APIs) to acquire and release resources in an automated way. Certain such APIs allow the operator to set conditions for when to scale up or down cloud usage and for what action to apply when one of these conditions are met. By using such an API, a cloud application can dynamically request the cloud provider to bootstrap new virtual machines or to shutdown operational virtual machines depending on their current load or other measurement that indicates the need to scale out or in resources (including response-time, drop-rate, queue lengths, etc.). This behavior is often referred to as "auto-scaling".

Although auto-scaling is a powerful technique to handle load surges and other dynamic behaviors in a cost-effective manner, its actual benefits depend on the employed scaling support - which decides when to scale out or in resources depending on current measurements and/or predictions on future measurements. Auto-scaling is only effective if the employed scaling support guarantees operational stability and optimality.

### Summary

There is a need for a distributed scaling architecture that combines dedicated load balancing and feedback control support to preserve operational stability and optimality when cloud applications scale out massively.

According to an aspect of the invention, there is provided a method for managing an elastic server farm comprising a plurality of servers, said servers being ordered according to a priority order, the method comprising:
- monitoring a load on the server having lowest priority according to said priority order; and
- declaring an overload condition for said elastic server farm if said load exceeds a predetermined first threshold and declaring an underload condition for said elastic server farm if said load drops below a predetermined second threshold.

Declaring a condition is understood to include generating a signal, setting a status flag, or otherwise indicating at an interface that the condition has occurred.

The invention is inter alia based on the insight of the inventors that load monitoring can be simplified by monitoring a single representative node of the elastic server farm. The invention is further based on the insight that by applying load distribution in a strictly priority-based fashion, the load of the lowest-priority node represents the most vital information about the server farm as a whole. In particular, the load of the lowest-priority node may represent whether an overload or underload situation is occurring. Although a single "lowest-priority node" is being referred to throughout the description, it shall be clear to the skilled person that embodiments using several lowest-priority nodes are within the scope of the invention.

The method according to the invention is an elasticity algorithm that allows building auto-scaling systems that preserve operational stability and optimality when the amount of nodes scales out, even on a massive scale.

Apart from the classical benefits of auto-scaling, this solution is advantageous in that it combines improved resource optimization with a low overhead that can be controlled and fine-tuned.

The method is advantageously carried out at a processor communicatively coupled to a digital data storage.

In an embodiment, the method according to the present invention further comprises establishing said priority order, based on the chronology of the addition of each of the servers to said elastic server farm, a more recently added server having a lower priority than a less recently added server.

In an embodiment, the method according to the present invention further comprises adding a server to said elastic server farm upon said declaring of an overload condition.

In an embodiment, the method according to the present invention further comprises removing a server from said elastic server farm upon said declaring of an underload condition.

In an embodiment, the method according to the present invention further comprises:
- obtaining load information from said plurality of servers;
- identifying available servers among said plurality of servers based on said load information;
- assigning a new task to a target server from among said available servers, said target server being ranked first according to said priority order.

In a particular embodiment, said obtaining comprises retrieving said load information from a distributed storage infrastructure.

In a more particular embodiment, the method further comprises at said plurality of servers: periodically transmitting load information to said distributed storage infrastructure.

In a more particular embodiment, said distributed storage infrastructure is provided by at least two servers comprised in said server farm.

In another particular embodiment, said assigning comprises the following steps at a first server of said plurality of servers:
- receiving notification of said new task;
- assessing whether there exists a second server of said plurality of servers with a higher priority than said first server and with sufficient available processing power for said new task;
- if said assessing is positive, delegating said new task to said second server, and if said assessing is negative, verifying whether said first server has sufficient available processing power for said new task;
- if said verifying is negative, identifying a third server from among said plurality of servers with a lower priority than said first server, and delegating said new task to said third server.

In a more particular embodiment, the method further comprises at said first server:
- receiving first load information from selected reporting servers among said plurality of servers, and
- transmitting second load information to selected listening servers among said plurality of servers;
wherein said second load information comprises a digest of said first load information and information pertaining to said first server. Said reporting servers may be servers with lower priority than said first server and said listening servers may be servers with higher priority than said first server. Alternatively said reporting servers may be servers with higher priority than said first server and said listening servers may be servers with lower priority than said first server. More in particular, said listening servers may be selected according to their rank in said priority order, wherein the number of non-selected servers between consecutive selected servers represents a geometric sequence.

According to an aspect of the present invention, there is provided a system for managing an elastic server farm comprising a plurality of servers, said servers being ordered according to a priority order, the system comprising:
a monitoring agent, operatively connected to said elastic server farm, and configured to monitor a load of said the server having lowest priority according to said priority order; and
load assessment logic configured to declare an overload condition for said elastic server farm if said load exceeds a predetermined first threshold and to declare an underload condition for said elastic server farm if said load drops below a predetermined second threshold.

The system according to the present invention is applicable to several different application areas, including real-time applications. This is possible because the system can employ different set of metrics (not just the CPU load, but any locally measurable value, like throughput, latency and roundtrip time) depending on the application. On top of that, since it is possible to fix the maximum number of hops a task can be dispatched to, it is possible to put an upper bound to the introduced latency, allowing for predictable overhead (required to size a real-time system properly).

The system may consist of a single integrated apparatus or several cooperating elements.

In an embodiment of the system according to the present invention, said monitoring agent is further configured to dynamically establish said priority order, based on the chronology of the addition of each of the servers to said elastic server farm, a more recently added server having a lower priority than a less recently added server; and the system further comprises a management agent configured to add a server to said elastic server farm upon said declaring of an overload condition and/or to remove a server from said elastic server farm upon said declaring of an underload condition.

### Brief Description of the Figures

Some embodiments of apparatus and/or methods in accordance with embodiments of the present invention are now described, by way of example only, and with reference to the accompanying drawings, in which:
Figure 1 provides a flow chart of a method according to an embodiment of the present invention, illustrating in particular steps to be executed by a management node;
Figure 2 provides a flow chart of a method according to an embodiment of the present invention, illustrating in particular steps to be executed by a load balancer;
Figure 3 provides a schematic overview of cooperating elements in a system according to an embodiment of the present invention;
Figure 4 provides a schematic overview of cooperating elements in a system according to another embodiment of the present invention;
Figure 5 provides a schematic overview of cooperating elements in a system according to another embodiment of the present invention;
Figure 6 schematically illustrates the mathematical concept of a "successor", as defined in the present patent application, for an exemplary set of 16 nodes;
Figure 7 provides a flow chart of a method according to an embodiment of the present invention, illustrating in particular steps to be executed by a cloud server; and
Figure 8 schematically illustrates a system according to an embodiment of the present invention.

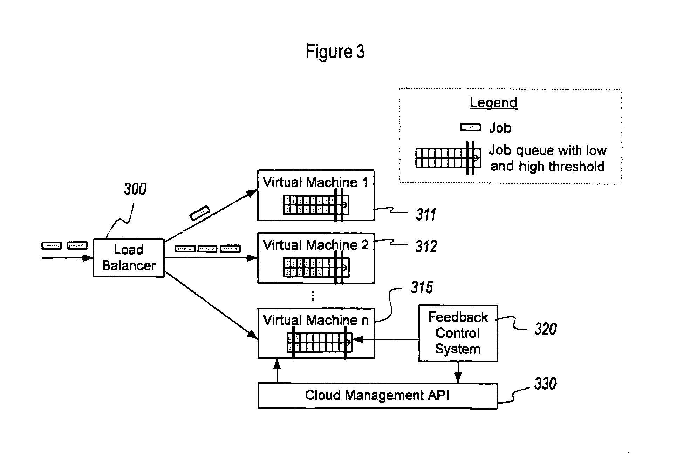

Throughout Figures 3-5, the same or similar elements are denoted by the same reference numerals.

### Description of Embodiments

Throughout the following description, the processing entities or servers of the elastic server farm will be referred to as nodes. These nodes may be added or removed from the server farm on an on-demand basis as will be described in more detail below. This ability to dynamically resize the server farm will be referred to as "elasticity". The nodes are most preferably virtual machines created and/or destroyed via appropriate calls to functions of a cloud management API. In this scenario, the elastic server farm may consist entirely of virtual machines instantiated on one or more physical machines.

To meet operational stability and optimality, existing solutions typically employ a centralized scaling architecture (feedback control system) that monitors all affected nodes (resources) to detect system dynamics, and instructs the cloud infrastructure to acquire or release nodes (resources) on the basis of this global system knowledge. Once the system scales out massively, however, such a centralized scaling architecture is not viable, as it would introduce a bottleneck compromising the required operational stability and optimality.

In a centralized approach to auto-scaling systems, a central feedback control system monitors every node to ensure that the global load (or other reference measurement) falls inside a specified target range, which is defined by a high and low threshold. If a global measurement exceeds the high threshold, the centralized control feedback system instructs the cloud infrastructure to acquire new resources. Similarly, if the global measurement drops below the low threshold, the control feedback system instructs the cloud infrastructure to release resources.

When the number of nodes involved in the system starts scaling out massively, a centralized auto-scaling architecture represents a bottleneck. As an alternative to this centralized approach, feedback control support can also be implemented as a decentralized system. Multiple feedback control elements each observe one or more nodes. To enable taking decisions based on the (global) status of all affected nodes, however, the affected (decentralized) feedback control elements need to exchange data periodically. These synchronization events, in turn, affect operational stability and optimality once the amount of nodes starts scaling out massively.

This problem can be overcome in part by eliminating the need to synchronize (all) decentralized feedback control elements - hence replacing the decentralized feedback control elements depicted above with local control elements. This can be accomplished by spreading load evenly over all nodes. In this case, each (local) feedback control element monitors its own load (or other measurement) to determine the global resource usage (given that the control element is aware of the number of nodes involved). Based on this knowledge of the global resource usage, each local control element can independently decide to instruct the cloud infrastructure to add or remove resources. One local resource decision algorithm is based on static thresholding: If a local measurement exceeds the control element's high threshold, then this control element instructs the cloud infrastructure to start another node. If this measurement drops below the control element's low threshold, then the control element instructs the cloud infrastructure to stop this node. In a variation on this scheme, the control element's low threshold may be adjusted in function of the number of nodes being monitored. A disadvantage of the distributed thresholding approaches is that multiple control elements can take the same decision at the same time, which may affect the system's operational stability since many nodes will be unnecessarily started and/or stopped. System stability may also be compromised when very large numbers of nodes are deployed. Compromised stability is due to the fact that the control nodes' low thresholds will converge towards their high thresholds.

Generally, taking local (isolated) scaling decision cannot yield the same optimal resource provisioning that can be achieved when taking global decisions based on global measurements.

It is an object of embodiments of the present invention to provide an auto-scaling solution that preserves operational stability and optimality when the number of nodes scales out massively. The invention is based inter alia on the insight of the inventors that the number of nodes to be monitored by the feedback control system can advantageously be limited, whereby auto-scaling behavior can be implemented if a control feedback system observes (at least) one single node. In addition, according to embodiments of the invention, dedicated load spreading support conserves a constant (high) load on all other nodes, which are not under supervision of the feedback control system.

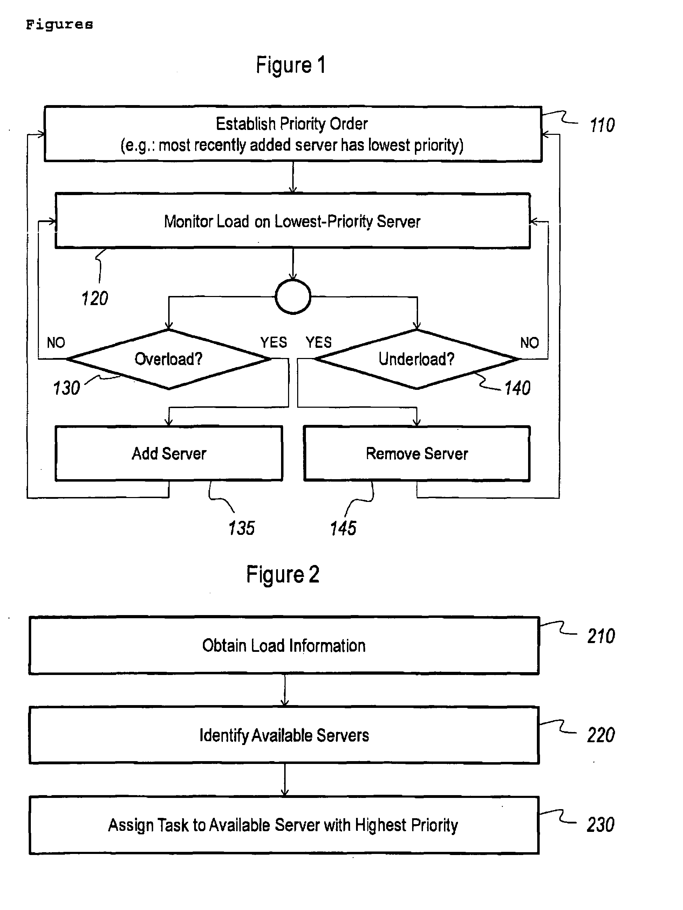

An exemplary embodiment of the method according to the invention is illustrated in **Figure 1****.**

An element for managing an elastic server farm (designated as Feedback Control System **320** in subsequent figures) will operate according to an embodiment of the present invention by monitoring **120** the load on a node with the lowest priority. This priority is established **110** or assigned in advance, optionally by the management element itself, and is dynamically updated as nodes are added or removed.

Advantageously, the monitoring **120** of the load of the lowest-priority node, provides the management element with information about the load of the system as a whole. Hence, the detection of an overload condition 130 at the lowest-priority server is indicative of an overload on the system as a whole, and may trigger the addition **135** of an additional node. Conversely, the detection of a condition of insufficient loading (hereinafter called an "underload" condition) **140** at the lowest-priority server is assumed to be indicative of an underload on the system as a whole, and may trigger the removal **145** of a node, preferably the node most recently added.

After addition **135** or removal **145** of a node, the priority ranking is updated **110,** and monitoring of the lowest-priority node resumes **120.**

A further exemplary embodiment of the method according to the invention is illustrated in **Figure 2****.**

A load balancer (designated as load balancer **300** in subsequent figures, optionally integrated with the Feedback Control System **320)** will operate according to an embodiment of the present invention by obtaining load information **210** pertaining to the nodes in the server farm (either directly from all nodes, or indirectly via a reduced set of intermediary nodes or "reporting nodes"), identifying **220** nodes that have processing power available to take on a new task, and assigning **230** a new task to the highest-priority node among the available nodes. This approach ensures that the processing capacity of the server farm is filled up according to the priority of the nodes, such that the load status of the lowest-priority remains representative for the server farm as a whole at all times.

The above aspects of the invention will now be further clarified in the context of exemplary scenarios. **Figures 3-5** illustrate a system comprising a load balancer **300** configured to distribute tasks to a plurality of nodes **311-315.** For clarity purposes and without loss of generality, five nodes **311-315** are assumed to be present in the following description, only three of which **(311, 312, 315)** are graphically illustrated for conciseness reasons.

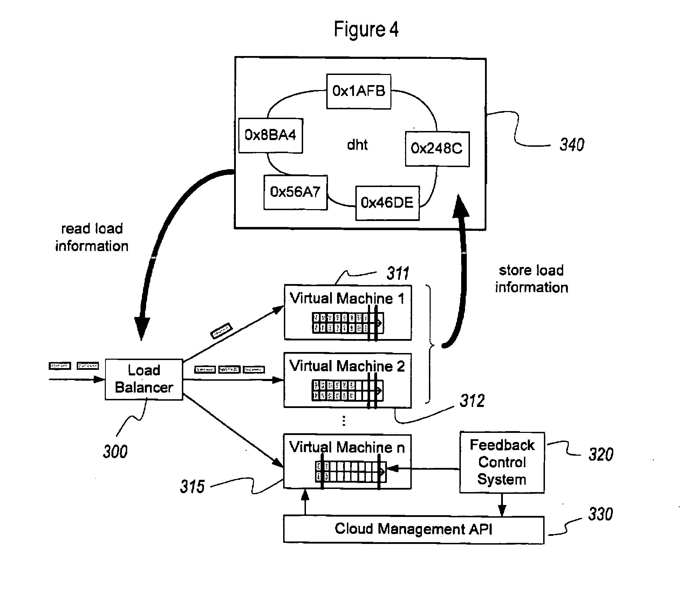

The most recently acquired n nodes (n ≥ 1), more specifically node **315** in the examples illustrated in Figures 3 and 4, are being observed by the feedback control system **320.** Each one of the remaining node **311-314** periodically reports to the load balancer **300** how much extra load (or other measure) it needs to fall inside a specified static target range (which is node specific if the nodes have heterogeneous capabilities).

When dispatching new tasks, the load balancer **300** first searches for nodes that need extra load to fall inside their target range, and dispatches the task to one of these nodes. If none of these nodes is found, the load balancer **300** delivers the task to the last acquired node(s) **315,** which is (are) being observed by the feedback control system.

Since the load balancer **300** conserves a constant load on all the previously acquired nodes **311-314,** the feedback control system **320** only needs to monitor the last acquired node(s) **315.** If the load on the monitored node(s) **315** exceeds a high threshold, the feedback control system **320** instructs the cloud infrastructure to acquire new virtual machines and to start monitoring them. Next, it stops monitoring those nodes that had been created earlier. The nodes that are not being monitored any more, in turn, start reporting their load to the load balancer **300.** Similarly, if the load of the last node(s) **315** drops below a low threshold, the feedback control system **320** instructs the cloud infrastructure to release the last acquired node(s) **315** and starts monitoring the previously acquired node(s) **314,** which in turn stop informing the load balancer **300** about their load.

The feedback control system **320** thus preserves the order in which resources have been acquired, and releases resources in the inverse order.

Note that the static target range of the last node(s) **315,** which are being observed by the feedback control system **320** can be different from the static target range of the other nodes **311-314.** The static target range of the node(s) **315** being monitored by the feedback control element **320** indicates when to acquire or release resources. The static target range of the node(s) **311-314** reporting to the load balancer **300,** however, indicates their target load. This can be different when heterogeneous nodes (having different load capacities) are involved.

Next, we will describe two particular embodiments of the auto-scaling method presented above. The first one is based on a stateless centralized load-balancer, which due to its simplicity should not represent a bottleneck. The second solution adopts a completely decentralized architecture based on a DHT-like architecture for both the auto-scaling and the load balancing.

The first embodiment, schematically illustrated in **Figure 3****,** includes a stateless centralized load balancer **300.** The load balancer **300** can periodically query the nodes **311-314** to determine how much extra load they can handle, or the nodes **311-314** can periodically publish this measurement to the load balancer **300.**

When the number of nodes scales out significantly, this load information can be stored in a decentralized distributed storage infrastructure such as DHT **340** instead of centralized server, as schematically illustrated in **Figure 4****.**

As an alternative, the nodes **311-314** can also use DNS records to support the auto-scaling solution presented above. By frequently updating the priority and weight fields (and/or any other suitable fields) of DNS records, the nodes **311-314** can inform the load balancer **300** on how much extra load they need to fall inside their target range. In a similar fashion, DHT **340** may have a DNS-based front-end.

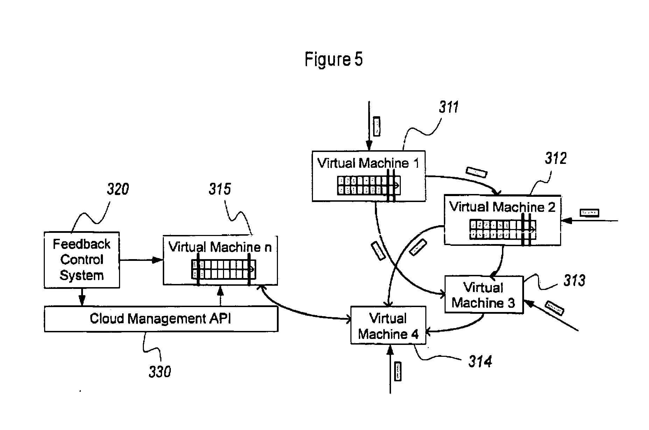

When the number of acquired nodes scales out massively, the central load balancer can (may? Or is capable of... can is a little ambiguous whether it is signaling optional or capable) be replaced with a decentralized version, implemented by the nodes **311-314** themselves, as schematically illustrated in **Figure 5****.** In this embodiment, nodes **311-314** are connected to each other forming an overlay. This overlay is used to exchange information about the current load of the nodes **311-314.** A task, then, is submitted to an arbitrary node **311,** which based on the information collected through the overlay network, will forward it (if necessary) either to node **312** or to node **313,** depending on what is considered to be the "most suitable" one. The same operation is repeated recursively at all nodes that receive the task, until the "most suitable" one is found.

"Most suitable" must be understood in terms of availability and priority. Nodes are implicitly prioritized in any appropriate manner. In one advantageous embodiment, prioritization is based on the uptime of the respective nodes. In a particularly advantageous embodiment, the node that has been running for the largest amount of time has the highest priority. Availability means that the target node must be able to handle the task, i.e. it must have sufficient processing resources available. Thus, the "most suitable node" is the node that has the highest priority (e.g., the node that been running for the largest amount of time) that can handle the task.

In the exemplary case of uptime-based prioritization, this means that the most recently created nodes execute tasks only if none of the other nodes can handle tasks. This ensures that the most recently created nodes are being filled up only if there is no more capacity available on the elder nodes.

The prioritization mechanism allows the Feedback Control System **320** to determine that the entire system is getting overloaded just by monitoring the load on the most recent nodes **315.**

The accuracy of the information at each node determines the number of nodes that a task needs to traverse before being executed. The parameters that regulate the accuracy are the frequency at which information is exchanged and the number of nodes each node is connected to. These parameters must be chosen according to the size of the system and the requirement of the application and establish a trade-off between network traffic due to information exchange and rapidity of execution due to task forwarding.

A possible embodiment of the overlay could be a full mesh, where each node periodically exchanges information with any other node. In this solution, every node has a complete view on the system and can forward the task directly to the most appropriate node.

On the other side of the spectrum, one can have an embodiment based on an overlay similar to a distributed hash table (DHT), where each node is connected to a limited number of other nodes, called "neighbors". In this embodiment, each node is associated with an ID, which is assigned when the node is started incrementing the ID of the last node previously started; i.e. the first node has ID = 1, the second ID = 2 and so forth.

The mathematical concept of a "successor" is now introduced as a particularly efficient way to implement and generalize the above mentioned concept of "neighbor". The skilled person will however appreciate that other mathematical implementations of the "neighbor" concept may be used to obtain similar results. Node *B* is said the successor of order 0 of node *A,* denoted as *B* = succ(A, 0), if one of the following conditions holds:
1. There is no running node X such that
   ID_{A} < ID*_{X}* < ID_{B}, (this in most of the cases means that ID*_{B}* = ID*_{A}* + 1, but the generic statement contemplates the case in which some nodes may have become inoperative, e.g. as a consequence of a system crash).
2. Node *A* is the running node with the largest ID and node *B* is the running node with the smallest ID. This means that the successor of the last node is the first node, wrapping the ID space around to avoid inconsistencies at the boundaries of the set.

Node *B* is said the successor of order i of node *A,* denoted as *B* = succ(A, i), if *B* = succ(succ(A, i-1), i-1).

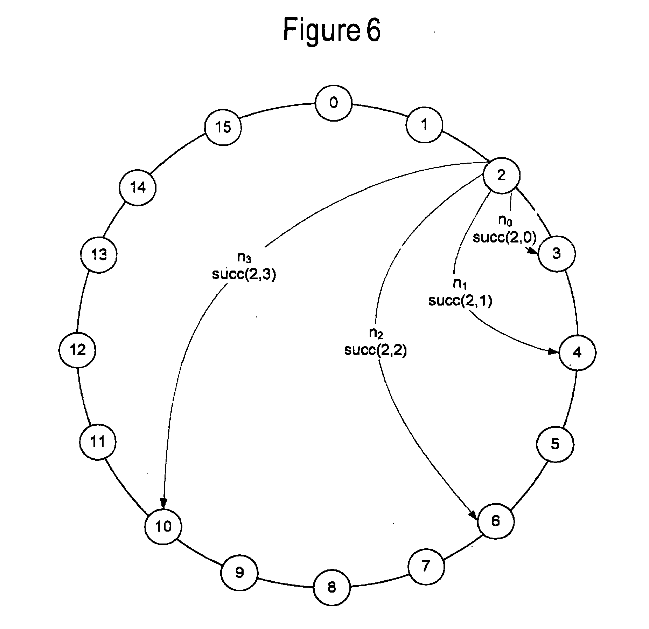

Let us define M as the total number of nodes that we allow in the system. Consider a generic node A, this node will have *N*=log₂(*M*) neighbors denoted as no, *n*₁, ..., *n*_{*N*-1}, where *nᵢ*=succ(*A*, i). An exemplary system is schematically illustrated in **Figure 6** as a ring representing the ID space, in which the neighbors of a node with ID = 2 are pointed out.

The overlay described is very similar to the ones used in DHTs and they can be maintained with very well-known techniques. Advantageously, such techniques provide robustness and generate a small amount of traffic. As used herein, robust means that the system can guarantee its service in spite of failure of one or multiple nodes.

Each node A periodically sends to all the neighbors with an ID > ID*_{A}* its load status, in particular it will send whether it can handle more tasks or not and a digest of the information received by other nodes with ID < ID_{A}. The digest in its simplest form consists of 1 bit of information which expresses if A is aware of at least one node with ID < ID_{A} which can handle more tasks. Alternatively the digest is more elaborate.

Similarly, when node A receives information from a node B (where ID*_{B}* < ID*_{A}*), it replies with its load status and a digest of the information received by other nodes with ID > ID_{A}.

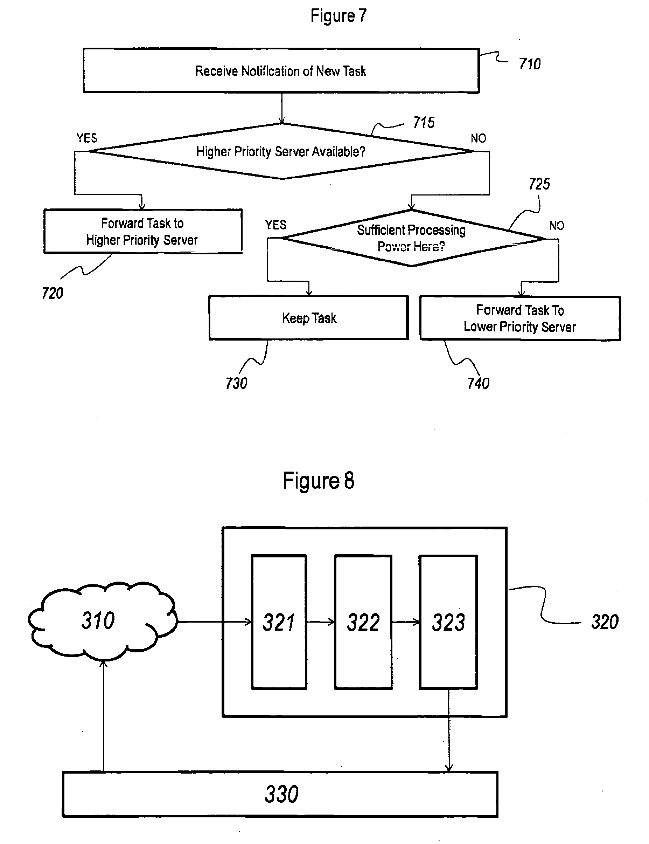

An exemplary task allocation scheme executed at an exemplary node A will now be described in connection with **Figure 7****.** This scheme relies on information present at node A concerning resource availability at other nodes; this information is preferably obtained by means of the reporting and digesting scheme elaborated above (not explicitly illustrated in Figure 7).

When a node A receives a task, as shown in step **710,** it looks among the nodes with ID < ID_{A} for the node ID*_{B}* with the smallest ID that can handle more tasks or knows other nodes with ID < ID*_{B}* that can handle more tasks, i.e. it looks for an available node B with higher priority as shown in step **715.** If B exists then A forwards the task to it as shown in step **720;** otherwise, A tries to execute the task locally, as shown in step **730,** if an assessment of the available local processing power 725 indicates that this is possible. If A cannot execute the task locally, it looks among the nodes with ID > ID*_{A}* for the node C with the smallest ID that can handle more tasks or knows other nodes with ID > ID*_{C}* that can handle more tasks, as shown in step **740.**

This procedure will execute the task on the node with the smallest ID in the system that can handle it. This guarantees that a task is executed by the last created node(s) (largest ID(s)), only if all the other nodes cannot handle it, i.e. it implements the general concept of prioritization through an uptime-based priority ranking. It will be understood that IDs, and thus the place of each node in the priority ranking, could in principle be assigned on the basis of a different criterion.

Thanks to the particular choice of function to implement the "neighbor" concept, i.e. the "successor" function, the number of forwarding steps needed is in the order of log(M).

If a node A does not have neighbors with ID < ID*_{A}*, it means that it has the largest ID and thus that is the last created and will run the threshold-based feedback control system.

Figure 8 schematically illustrates a system **320** according to the present invention in more detail. For clarity purposes, the plurality of nodes **311-315** of the previous figures have not been illustrated individually, but only collectively as the collective server farm **310,** symbolized by a cloud. The structure of the server farm and the interaction between the nodes may nevertheless be as described above.

The feedback control system **320,** which may be a single apparatus or a system comprising separate cooperating elements, is shown as comprising a monitoring agent **321,** load assessment logic **322,** and an optional management agent **323.** The system, or any of its constituent elements, may be implemented as a processor coupled to memory, configured to run a program whose instructions correspond to the actions of these elements as described herein.

The monitoring agent **321** is operatively connected to the elastic server farm **310** and configured to monitor a load of the server having lowest priority according to the priority order governing the server farm **310.** The monitoring agent **321** may further be configured to establish the priority order among the nodes in the elastic server farm **310.**

The load assessment logic **322** has access to monitoring information obtained by the monitoring agent **321.** The load assessment logic **322** is configured to declare an overload condition for the elastic server farm **310** if the load exceeds a predetermined first threshold and to declare an underload condition of the elastic server farm **310** if the load drops below a predetermined second threshold.

In particular, declaring an overload condition or an underload condition may consist of generating an appropriate signal at the interface between the load assessment logic **322** and the management agent **323,** or at an exposed interface of the load assessment logic **322.** The signal is preferably converted by the management agent **323** into an instruction sent to the cloud infrastructure, in particular via cloud management API **330.** The cloud infrastructure preferably responds by increasing available resources in case of an overload condition, and decreasing available resources in case of an underload condition.

Although steps of various embodiments of the methods according to the present invention are illustrated and described as occurring in a particular order, this is done for illustrative purposes only, and is not intended to reduce the scope of the invention to embodiments adhering to that same order. The skilled person will appreciate that certain steps of these methods may be carried out simultaneously or in a different order than the one described, unless it is clear from the description that one step cannot occur until another one has completed or vice versa.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method for managing an elastic server farm comprising a plurality of servers, said servers being ordered according to a priority order, the method comprising:
- monitoring a load on the server having lowest priority according to said priority order; and
- declaring an overload condition for said elastic server farm if said load exceeds a predetermined first threshold and declaring an underload condition for said elastic server farm if said load drops below a predetermined second threshold.

2. The method of claim 1, further comprising establishing said priority order based on the chronology of the addition of each of the servers to said elastic server farm, wherein a more recently added server is set to a lower priority than a less recently added server.

3. The method of any of the preceding claims, further comprising adding a server to said elastic server farm upon said declaring of an overload condition.

4. The method of any of the preceding claims, further comprising removing a server from said elastic server farm upon said declaring of an underload condition.

5. The method of any of the preceding claims, further comprising:
- obtaining load information from said plurality of servers;
- identifying available servers among said plurality of servers based on said load information;
- assigning a new task to a target server from among said available servers, said target server being ranked first according to said priority order.

6. The method according to claim 5, wherein said obtaining comprises retrieving said load information from a distributed storage infrastructure.

7. The method according to claim 6, further comprising at said plurality of servers: periodically transmitting load information to said distributed storage infrastructure.

8. The method according to claim 7, wherein said distributed storage infrastructure is provided by at least two servers comprised in said server farm.

9. The method according to claim 5, wherein said assigning comprises the following steps at a first server of said plurality of servers:
- receiving notification of said new task;
- assessing whether there exists a second server of said plurality of servers with a higher priority than said first server and with sufficient available processing power for said new task;
- if said assessing is positive, delegating said new task to said second server, and if said assessing is negative, verifying whether said first server has sufficient available processing power for said new task;
- if said verifying is negative, identifying a third server from among said plurality of servers with a lower priority than said first server, and delegating said new task to said third server.

10. The method according to claim 9, further comprising at said first server:
- receiving first load information from selected reporting servers among said plurality of servers, and
- transmitting second load information to selected listening servers among said plurality of servers;
wherein said second load information comprises a digest of said first load information and information pertaining to said first server.

11. The method of claim 10, wherein said reporting servers are servers with lower priority than said first server and said listening servers are servers with higher priority than said first server.

12. The method of claim 11, wherein said reporting servers are servers with higher priority than said first server and said listening servers are servers with lower priority than said first server.

13. The method of any of claim 10-12, wherein said listening servers are selected according to their rank in said priority order, wherein the number of non-selected servers between consecutive selected servers represents a geometric sequence.

14. A system for managing an elastic server farm comprising a plurality of servers, said servers being ordered according to a priority order, the system comprising: a monitoring agent, operatively connected to said elastic server farm, and configured to monitor a load of the server having lowest priority according to said priority order; and
load assessment logic configured to declare an overload condition for said elastic server farm if said load exceeds a predetermined first threshold and to declare an underload condition for said elastic server farm if said load drops below a predetermined second threshold.

15. The system according to claim 14, wherein said monitoring agent is further configured to dynamically establish said priority order based on the chronology of the addition of each of the servers to said elastic server farm, a more recently added server having a lower priority than a less recently added server; the system further comprising a management agent configured to add a server to said elastic server farm upon said declaring of an overload condition and/or to remove a server from said elastic server farm upon said declaring of an underload condition.
